(19) Europäisches Patentamt
European Patent Office
Office européen des brevets

(11) **EP 4 362 133 A1**

(12) **EUROPEAN PATENT APPLICATION**
published in accordance with Art. 153(4) EPC

(43) Date of publication:
**01.05.2024 Bulletin 2024/18**

(21) Application number: **22828813.0**

(22) Date of filing: **24.06.2022**

(51) International Patent Classification (IPC):
*H01M 4/36* (2006.01)     *H01M 4/38* (2006.01)
*H01M 4/48* (2010.01)     *H01M 4/58* (2010.01)
*H01M 4/583* (2010.01)     *H01M 4/62* (2006.01)
*H01M 4/587* (2010.01)     *H01M 10/052* (2010.01)

(52) Cooperative Patent Classification (CPC):
**H01M 4/36; H01M 4/38; H01M 4/48; H01M 4/58;
H01M 4/583; H01M 4/587; H01M 4/62;
H01M 10/052; Y02E 60/10**

(86) International application number:
**PCT/KR2022/009014**

(87) International publication number:
**WO 2022/270966 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.06.2021  KR 20210082918**

(71) Applicant: **Hansol Chemical Co., Ltd
Seoul 06169 (KR)**

(72) Inventors:
• **KWON, Se-Man
Wanju-gun, Jeollabuk-do 55321 (KR)**

• **HONG, Soon-Ho
Wanju-gun, Jeollabuk-do 55321 (KR)**
• **KANG, Sung-Hwan
Wanju-gun, Jeollabuk-do 55321 (KR)**
• **SHIM, Hyeon-Woo
Wanju-gun, Jeollabuk-do 55321 (KR)**
• **PARK, Byung-Hoon
Wanju-gun, Jeollabuk-do 55321 (KR)**

(74) Representative: **Cabinet Laurent & Charras
Le Contemporain
50 Chemin de la Bruyère
69574 Dardilly Cedex (FR)**

(54) **NEGATIVE ELECTRODE ACTIVE MATERIAL, METHOD FOR PREPARING SAME, AND LITHIUM SECONDARY BATTERY COMPRISING SAME**

(57)     The present invention relates to a negative electrode active material, a method for preparing same, and a lithium secondary battery comprising same, the negative electrode active material comprising: a core; a shell surrounding the core; and metal particles having the entire surface or a part of the surface coated with an alkali metal inclusion.

FIG. 1

## Description

### Technical Field

The present disclosure relates to a negative electrode active material, a method for preparing the same, and a lithium secondary battery including the same, and specifically to a high-output negative electrode active material prepared by introducing a metal particle in which a part or all of the surface thereof is coated with an alkali metal-containing compound, a method for preparing the same, and a lithium secondary battery including the same.

### Background Art

Lithium-ion batteries (LIBs) have been adopted and used as the main power source for mobile electronic devices due to the high energy density thereof and ease of design. In addition, the application range thereof is expanding to electric vehicles or power storage devices for new renewable energy.

To be applied to new application fields, there is a demand for continuous research on LIB materials having properties including higher energy density and longer life.

In particular, in the case of negative electrode materials, research has been conducted on various materials such as silicon, tin, and germanium in addition to carbon.

Among these, silicon-based negative electrode materials have much higher energy density than currently available graphite negative electrode materials and thus have received significant attention.

However, silicon-based negative electrode materials have fatal disadvantages, such as deterioration in electrochemical properties due to the formation of an unstable SEI layer resulting from a side reaction between the surface of silicon and an electrolyte, grinding of electrode materials due to internal stress resulting from rapid volume expansion occurring during charging and discharging, and the like.

To solve such problems, a great deal of research has been conducted on improving reversibility on the surface through various surface treatments of silicon-based negative electrode materials. In particular, research on a method for coating the surface with carbon materials or forming a composite is widely in progress.

On the other hand, various surface treatments using carbon materials require composite and expensive processes. Although surface treatment using carbon materials improved some of the life characteristics of silicon-based negative electrode materials, the ionic conductivity thereof was reduced. As a result, there are limitations in improving output characteristics for implementing fast-charging/discharging LIBs with recently growing demand.

In other words, surface treatment using existing carbon materials was performed while forming a composite with carbon without improving the low ionic conductivity of silicon-based negative electrode materials, making it difficult to obtain the output characteristics required for fast-charging/discharging LIBs.

Therefore, there is a need to develop technology for surface treatment of high-capacity silicon-based negative electrode active materials that prevent the volume expansion of a silicon-based negative electrode material while improving the low ionic conductivity thereof.

[Document of related art]

[Patent Document]

(Patent Document 1) Korean Patent Application Publication No. 2019-0101807
(Patent Document 2) U.S. Patent No. 8,158,282

## Disclosure

### Technical Problem

Hence, the problem that the present disclosure aims to solve is to provide a negative electrode active material for a high-output secondary battery having high capacity and high energy density while enabling a behavior of being stably charged/discharged under high current density.

In addition, the present disclosure aims to provide a preparation method capable of preparing the negative electrode active material with high efficiency at low costs.

Furthermore, the present disclosure aims to provide an electrode and a lithium secondary battery including the negative electrode active material.

However, the problems to be solved by the present disclosure are not limited to the above description, and other problems can be clearly understood by those skilled in the art from the following description.

**Technical Solution**

In one aspect of the present application, a negative electrode active material containing a core, a shell surrounding the core, and

a metal particle in which a part or all of the surface thereof is coated with an alkali metal-containing compound,
in which the metal particle includes any one or more selected from the group consisting of Mg, Al, Si, Ca, Fe, Mg, Mn, Co, Ni, Zn, and Ge, and
the alkali metal-containing compound is represented by Formula 1,
is provided.

[Formula 1]              $A_xM_yO_z$

In Formula 1,

A includes any one or more selected from the group consisting of Li, Na, and K;
M includes any one or more selected from the group consisting of Mg, Al, Si, Ca, Fe, Mg, Mn, Co, Ni, Zn, and Ge; and

$$0.1 \leq x \leq 2.0, \, 0 \leq y \leq 2.0, \, \text{and} \, 0 \leq z \leq 2.0.$$

In another aspect of the present disclosure, a method for preparing a negative electrode active material, the method including: preparing an alkali metal-metal particle precursor by grinding a metal particle and an alkali metal precursor and then performing spray drying,

forming a composite by mixing the alkali metal-metal particle precursor, amorphous carbon, and crystalline carbon, and
performing heat treatment,
in which the metal particle includes any one or more selected from Si, Al, Ti, Mn, Ni, Cu, V, Zr, Mn, Co, Fe, and Nb,
the alkali metal precursor includes any one more selected from the group consisting of Li, Na, and K,
is provided.

In a further aspect of the present application, an electrode containing the negative electrode active material is provided.
In yet another aspect of the present application, a lithium secondary battery, which includes: a negative electrode containing the negative electrode active material,

a positive electrode positioned while facing the negative electrode, and
an electrolyte positioned between the negative and the positive electrodes, is provided.

**Advantageous Effects**

A negative electrode active material, according to the present disclosure, is capable of providing a high-output secondary battery having high capacity and high energy density while enabling a behavior of being stably charged/discharged under high current density.
In addition, the negative electrode active material may be prepared with high efficiency at low costs.

**Description of Drawings**

FIG. 1 is a schematic diagram illustrating a negative electrode active material having a core-shell structure according to one embodiment of the present disclosure;
FIG. 2 shows scanning electron microscopy (SEM) images of a negative electrode active material according to Example 1 of the present disclosure;
FIG. 3 shows transmission electron microscopy (TEM) images of a negative electrode active material according to Example 1 of the present disclosure; and

FIG. 4 shows energy dispersive X-ray spectroscopy (EDS) line scan analysis results for a cross section of a negative electrode active material according to Example 1 of the present disclosure.

**Best Mode**

All terms including technical and scientific terms used herein have the same meaning as commonly understood by those skilled in the art to which the present disclosure belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

Therefore, the configuration of embodiments described herein are merely examples and do not exhaustively present the technical spirit of the present disclosure. Accordingly, it should be appreciated that there may be various equivalents and modifications that can replace the embodiments and the configurations at the time at which the present application is filed.

As used herein, the singular forms are intended to include the plural forms as well, unless the context clearly indicates otherwise. It will be further understood that the terms "comprise", "include", "have", and the like when used herein, specify the presence of stated features, integers, steps, components, or combinations thereof but do not preclude the presence or addition of one or more other features, integers, steps, components, or combinations thereof.

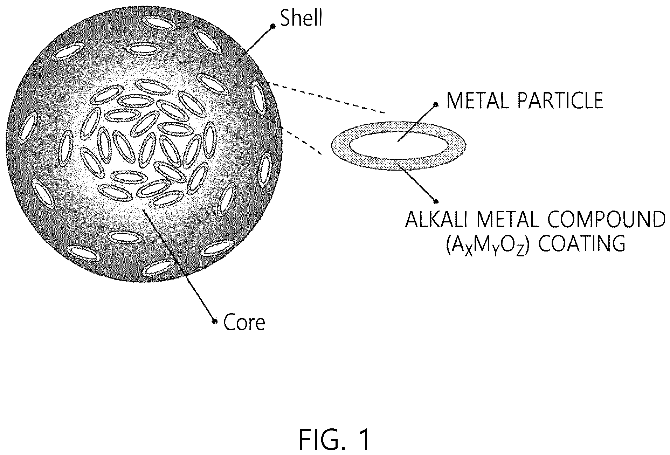

As illustrated in FIG. 1, a negative electrode active material, according to one aspect of the present application, contains a core, a shell surrounding the core, and a metal particle in which a part or all of the surface thereof is coated with an alkali metal-containing compound, in which the metal particle includes any one or more selected from the group consisting of Mg, Al, Si, Ca, Fe, Mg, Mn, Co, Ni, Zn, and Ge, and the alkali metal-containing compound is represented by Formula 1.

[Formula 1] $A_xM_yO_z$

In Formula 1,

A includes any one or more selected from the group consisting of Li, Na, and K;

M includes any one or more selected from the group consisting of Mg, Al, Si, Ca, Fe, Mg, Mn, Co, Ni, Zn, and Ge; and

$$0.1 \leq x \leq 2.0, \ 0 \leq y \leq 2.0, \text{ and } 0 \leq z \leq 2.0.$$

The part or all of the surface of the metal particle in the negative electrode active material may be coated with the alkali metal-containing compound.

For example, 30% or more, 40% or more, 50% or more, 60% or more, 70% or more, 80% or more, 90% or more, and 100% of the surface of the metal particle may be coated with the alkali metal-containing compound. In addition, the degree of coating may be adjusted by varying process conditions when preparing the negative electrode active material.

The metal particle whose surface is coated with the alkali metal-containing compound may be contained in both the core and the shell, and each amount contained in the core and the shell may be adjusted by varying the process conditions during preparation.

For example, the metal particle whose surface is coated with the alkali metal-containing compound may be contained in a relatively greater amount in the core than in the shell.

The alkali metal-containing compound applied on the surface of the metal particle has high ionic conductivity and thus may facilitate the electrochemical reaction of metals to improve rate capability. In addition, the improved rate capability may improve the high-rate charging/discharging and fast charging performance of the battery.

In one embodiment, the metal particle may be a silicon (Si)-containing particle and may include any one or more selected from the group consisting of a silicon particle, a silicon oxide particle, a silicon carbide particle, and a silicon alloy particle.

The silicon-containing particle may be represented by Formula 2.

[Formula 2] $SiOx \ (0 \leq x \leq 0.5)$

In Formula 2, when x exceeds 0.5, there may be a disadvantageous effect on battery capacity and efficiency. In other words, lithium ions react with oxygen and thus produce irreversible products such as $Li_2O$ and Li-silicate ($Li_xSi_yO_z$). As a result, the lithium ions that react with the negative electrode material fail to return to an electrolyte or positive electrode material and are trapped inside the negative electrode, thereby keeping capacity from being developed and reducing efficiency.

In addition, the silicon carbide may be, for example, SiC, and the silicon alloy may be, for example, a Si-Z alloy (where Z is one or more elements selected from among an alkali metal, an alkaline earth metal, an element in group 13, an element in group 14, a transition metal, a rare-earth element, and combinations thereof, but not Si).

The silicon (Si)-containing particle may have a median particle diameter (D50) of 50 to 1,000 nm, which is preferably in a range of 600 to 900 nm.

When the median particle diameter of the silicon-containing particle exceeds 1,000 nm, high battery capacity may be obtainable, but the battery life may be significantly shortened, and when the median particle diameter of the silicon-containing particle is smaller than 50 nm, the battery capacity and efficiency may be reduced, and manufacturing costs may increase.

In one embodiment, the metal particle may have a grain size of 5 to 50 nm, which is preferably in a range of 10 to 20 nm.

When the grain size of the metal particle is smaller than 5 nm, there may be advantages in terms of battery life but disadvantageous in capacity implementation. When the grain size of the metal particle exceeds 50 nm, there may be disadvantages in terms of manufacturing costs and life stability of the battery.

In one embodiment, in the alkali metal-containing compound of Formula 1, A may be Li, and y may be 1. For example, the alkali metal-containing compound may be $Li_xM$.

In one embodiment, the core may further contain amorphous carbon, and the shell may contain crystalline carbon.

In other words, while the shell may be a carbon-based shell and made mostly of crystalline carbon, the carbon component added to the core may be mostly amorphous carbon.

In addition, the carbon-based shell may contain a small amount of amorphous carbon, and the core may contain a small amount of crystalline carbon.

In the case where the core contains a small amount of crystalline carbon, the farther the distance away from the center of the core, the greater the specific gravity of graphite and the smaller the specific gravity of amorphous carbon.

The carbon components added to the carbon-based shell and the core may serve to alleviate the volume expansion of the metal particle in which a part or all of the surface thereof is coated with the alkali metal-containing compound during charging and discharging.

The amorphous carbon of the core may be positioned between the metal particles in which a part or all of the surface thereof is coated with the alkali metal-containing compound while surrounding the same. In other words, amorphous carbon may act as a matrix and thus become the core having a form in which the metal particle in which a part of all of the surface thereof is coated with the alkali metal-containing compound is dispersed.

On the other hand, pores may be formed in the core of the negative electrode active material, and internal pores in the core may reduce the initial irreversible capacity of the battery and help alleviate the volume expansion of Si.

The pores formed in the core may have a volume of 0.01 to 0.5 cc/g. The farther the distance away from the center of the core, the smaller the specific gravity of the pores may be.

A method for preparing a negative electrode active material, according to another aspect of the present application, may include: preparing an alkali metal-metal particle precursor by grinding a metal particle and an alkali metal precursor and then performing spray drying; forming a composite by mixing the alkali metal-metal particle precursor, amorphous carbon, and crystalline carbon; and performing heat treatment.

The metal particle may include any one or more selected from Si, Al, Ti, Mn, Ni, Cu, V, Zr, Mn, Co, Fe, and Nb, and the alkali metal precursor may include any one or more selected from the group consisting of Li, Na, and K.

During the spray drying process, the alkali metal precursor is positioned on the metal particle, and during the heat treatment process, a part or all of the surface of the metal particle may be coated with an alkali metal-containing compound.

In one embodiment, the alkali metal precursor may include one or more selected from the group consisting of $Li_2CO_3$, LiOH and a hydrate thereof, NaOH and a hydrate thereof, KOH and a hydrate thereof, lithium acetate (Li acetate), lithium isopropoxide (Li isopropoxide), LiCl, and LizO.

In addition, the amorphous carbon may include any one or more selected from the group consisting of a coal-based pitch, a mesophase pitch, a petroleum-based pitch, tar, a coal-based oil, a petroleum-based heavy oil, an organic synthetic pitch, sucrose, a naphthalene resin, a polyvinyl alcohol resin, a furfuryl alcohol resin, a polyacrylonitrile resin, a polyamide resin, a phenolic resin, furan resin, a cellulose resin, a styrene resin, an epoxy resin or vinyl chloride resin, a block copolymer, a polyol, and a polyimide resin. In addition, the crystalline carbon may include any one or more selected from the group consisting of natural graphite, artificial graphite, expanded graphite, graphene, carbon black, and a fullerene.

Natural graphite is graphite that is produced naturally, and examples thereof include flake graphite, high-crystalline graphite, amorphous graphite, and the like. Artificial graphite, which is artificially synthesized, is prepared by heating amorphous carbon to high temperatures, and examples thereof include primary graphite or electrographite, secondary graphite, graphite fiber, and the like.

Expanded graphite is obtained by intercalating chemical compounds, such as acids or alkalis, between layers of graphite and applying heat to expand the vertical layers of the molecular structure. Graphene includes a monolayer or a plurality of monolayers of graphite.

Carbon black, a crystalline material having less regularity than graphite, may be transformed into graphite when heated at a temperature of about 3,000°C for a long time. A fullerene is a carbon mixture containing at least 3 wt% of a fullerene, a compound having a polyhedral bundle-like form and containing 60 or more carbon atoms. The first carbon-based material may be used alone or in combination of two or more types of crystalline carbon. For example, natural graphite or artificial graphite may be used. The crystalline carbon may have a spherical, plate-like, fibrous, tubular, or powder form.

Preferably, a pitch may be used as the amorphous carbon. As the pitch, a pitch having a softening point of 100 to 250°C may be used. In particular, a petroleum-based or coal-based pitch containing a quinolone insoluble (QI) component in an amount of 5 wt% or less, more preferably, 1 wt% or less, may be used.

On the other hand, natural graphite may be preferably used as the crystalline carbon. As for the purity of the graphite, a high purity grade containing a fixed carbon in an amount of 99 wt% or more, more preferably, 99.95 wt% or more, may be used.

In addition, flake graphite may be suitable for increasing conductivity by making contact with silicon.

In one embodiment, the forming of the composite may be performed by a physical method.

The physical method may include any one or more selected from the group consisting of milling, a high-energy process, stirring, mixing, compression, and the like.

For example, the forming of the composite may be performed by ball milling. In particular, a planetary ball mill may efficiently mix and grind the resulting mixture by rotation and revolution without making contact with a composition.

Examples of a ball applicable to ball milling may include a zirconia ball and the like. There is no limitation in the type of ball, and the ball may have, for example, a size of about 0.3 to 10 mm, but is not limited thereto.

On the other hand, the forming of the composite may be performed under conditions in which a reaction time is in a range of 1 minute to 24 hours, a reaction temperature is in a range of 40 to 250°C, and a reaction atmosphere is atmospheric or inert.

In addition, the heat treatment may be performed at a temperature of 700 to 1,100°C.

The heat treatment time is not particularly limited. However, the heat treatment may be, for example, performed for 10 minutes to 5 hours.

An electrode, according to a further aspect of the present disclosure, may contain the negative electrode active material. In addition, a lithium secondary battery may include an electrode containing the negative electrode active material as a negative electrode, a positive electrode positioned while facing the negative electrode; and an electrolyte positioned between the negative and positive electrodes.

The negative electrode may include the negative electrode active material and be, for example, prepared by a method of mixing the negative electrode active material, a binder, and, optionally, a conductive additive in a solvent to prepare a negative electrode active material composition and then shaping the composition into a predetermined form or applying the composition on a current collector such as copper foil and the like.

In addition to the negative electrode active material described above, the negative electrode may further contain a negative electrode active material commonly used as a negative electrode active material for lithium batteries in the art. Examples of the commonly used negative electrode active material may include any one or more selected from the group consisting of lithium metal, a metal capable of forming an alloy with lithium, a transition metal oxide, a non-transition metal oxide, and a carbon-based material.

Examples of the metal capable of forming an alloy with lithium may include Si, Sn, Al, Ge, Pb, Bi, Sb a Si-Y alloy (where Y is an alkali metal, an alkaline earth metal, an element in group 13, an element in group 14, a transition metal, a rare-earth element, or a combination thereof, but not Si), a Sn-Y alloy (where Y is an alkali metal, an alkaline earth metal, an element in groups 13 to 16, a transition metal, a rare-earth element, or a combination thereof, but not Sn), and the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Examples of the transition metal oxide may include lithium titanium oxide, vanadium oxide, lithium vanadium oxide, and the like.

Examples of the non-transition metal oxide may include $SnO_2$, SiOx ($0 < x \leq 2$), and the like. The carbon-based material may be crystalline carbon, amorphous carbon, or a mixture thereof. The crystalline carbon may be graphite such as amorphous, plate-like, flake, spherical, or fibrous natural graphite or artificial graphite. In addition, the amorphous carbon may be soft carbon (low-temperature sintered carbon) or hard carbon, mesophase pitch carbide, calcined coke, and the like.

When using both the negative electrode active material and the carbon-based material, the oxidation reaction of the silicon-based active material may be prevented from occurring, and the SEI film may be effectively formed. As a result, a stable film is formed, and improved electrical conductivity is obtained, thereby further improving the charge and discharge properties of lithium.

A typical negative electrode active material may be blended with the negative electrode active material described above through mixing, applied on the surface of the negative electrode active material, or used in any other combination form.

The binder used in the negative electrode active material composition, which is a component that assists the binding between the negative electrode active material and the conductive additive and the binding between the negative electrode active material and the current collector, is added in an amount of 1 to 50 parts by weight based on 100 parts by weight of the negative electrode active material. For example, the binder may be added in an amount in a range of 1 to 30 parts by weight, 1 to 20 parts by weight, or 1 to 15 parts by weight, based on 100 parts by weight of the negative electrode active material.

Examples of the binder may include polyvinylidene fluorides, polyvinylidene chlorides, polybenzimidazoles, polyimides, polyvinyl acetates, polyacrylonitriles, polyvinyl alcohols, carboxymethylcellulose (CMC), starch, hydroxypropyl cellulose, regenerated cellulose, polyvinylpyrrolidones, tetrafluoroethylene, polyethylenes, polypropylenes, polystyrenes, polymethyl methacrylates, polyanilines, acrylonitrile butadiene styrene, phenolic resins, epoxy resins, polyethylene terephthalates, polytetrafluoroethylenes, polyphenylsulfides, polyamide-imides, polyetherimides, polyethylene sulfones, polyamides, polyacetals, polyphenylene oxides, polybutylene terephthalate, ethylene-propylene-diene terpolymer (EPDM), sulfonated EPDM, styrene-butadiene rubber, fluorine rubber, various copolymers, and the like.

The negative electrode may further contain the conductive additive optionally to further improve electrical conductivity by providing a conductive path to the negative electrode active material.

As the conductive additive, any material generally applicable to lithium batteries may be used. In addition, examples of the conductive additive used may include: carbon-based material such as carbon black, acetylene black, Ketjen black, and carbon fiber (for example, vapor-grown carbon fiber); metallic material such as metal powders or metal fibers of copper, nickel, aluminum, silver and the like; and conductive materials containing conductive polymers, such as polyphenylene derivatives, or a mixture thereof. The amount of the conductive additive used may be appropriately adjusted. For example, the negative electrode active material and the conductive additive may be added in a weight ratio in a range of 99:1 to 90:10.

As the solvent, N-methylpyrrolidone (NMP), acetone, water, and the like may be used. The solvent is used in an amount of 1 to 10 parts by weight based on 100 parts by weight of the negative electrode active material. When the amount of the solvent content falls within the above range, an operation for forming an active material layer may be performed with ease.

In addition, the current collector is typically prepared to a thickness of 3 to 500 $\mu$m. Any conductive current collector that does not cause chemical changes in the battery may be used without limitation, and examples thereof may include copper, stainless steel, aluminum, nickel, titanium, sintered carbon, copper or stainless steel whose surface is treated with carbon, nickel, titanium, silver, and the like, aluminum-cadmium alloy, and the like.

In addition, the current collector may form fine projections on the surface thereof to strengthen the bonding strength of the negative electrode active material and may be used in various forms such as films, sheets, foils, nets, porous materials, foams, non-woven fabrics, and the like.

A negative electrode plate may be manufactured by coating the upper portion of the current collector directly with the prepared negative electrode active material composition or may be obtained by casting the prepared negative electrode active material composition on a separate support and laminating a negative electrode active material film detached from the support on a copper foil current collector. The negative electrode is not limited to the forms listed above and may have forms other than those listed above.

The negative electrode active material composition may be used not only to manufacture electrodes for lithium secondary batteries but also to manufacture printable batteries by being printed on flexible electrode substrates.

Separately, to manufacture the positive electrode, a positive electrode active material composition in which a positive electrode active material, a conductive additive, a binder, and a solvent are mixed is prepared.

The positive electrode active material is a lithium-containing metal oxide, and any material commonly used in the art may be used.

For example, a compound represented by one formula among $Li_aA_{1-b}B_bD_2$ (where in the formula, $0.90 \leq a \leq 1.8$, and $0 \leq b \leq 0.5$); $Ei_aE_{1-b}B_bO_{2-c}D_c$ (where in the formula, $0.90 \leq a \leq 1.8$, $0 \leq b \leq 0.5$, and $0 \leq c \leq 0.05$); $LiE_{2-b}B_bO_{4-c}D_c$ (where in the formula, $0 \leq b \leq 0.5$, and $0 \leq c \leq 0.05$); $Li_aNi_{1-bc}Co_bB_cD_\alpha$ (where in the formula, $0.90 \leq a \leq 1.8$, $0 \leq b \leq 0.5$, $0 \leq c \leq 0.05$, and $0 < \alpha \leq 2$); $Li_aNi_{1-bc}Co_bB_cO_{2-\alpha}F_\alpha$ (where in the formula, $0.90 \leq a \leq 1.8$, $0 \leq b \leq 0.5$, $0 \leq c \leq 0.05$, and $0 < \alpha < 2$); $Li_aNi_{1-bc}Co_bB_cO_{2-a}F_\alpha$ (where in the formula, $0.90 \leq a \leq 1.8$, $0 \leq b \leq 0.5$, $0 \leq c \leq 0.05$, and $0 < \alpha < 2$); $Li_aNi_{1-bc}Mn_bB_cD_\alpha$ (where in the formula, $0.90 \leq a \leq 1.8$, $0 \leq b \leq 0.5$, $0 \leq c \leq 0.05$, and $0 < \alpha \leq 2$); $Li_aNi_{1-bc}Mn_bB_cO_{2-\alpha}F_\alpha$ (where in the formula, $0.90 \leq a \leq 1.8$, $0 \leq b \leq 0.5$, $0 \leq c \leq 0.05$, and $0 < \alpha < 2$); $Li_aNi_{1-bc}Mn_bB_cO_{2-\alpha}F_\alpha$ (where in the

formula, $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (where in the formula, $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where in the formula, $0.90 \leq a \leq 1.8$, and $0.001 \leq b \leq 0.1$); $Li_aCoG_bO_2$ (where in the formula, $0.90 \leq a \leq 1.8$, and $0.001 \leq b \leq 0.1$); $Li_aMnG_bO_2$ (where in the formula, $0.90 \leq a \leq 1.8$, and $0.001 \leq b \leq 0.1$); $Li_aMn_2G_bO_4$ (where in the formula, $0.90 \leq a \leq 1.8$, and $0.001 \leq b \leq 0.1$); $QO_z$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$ may be used.

In the formulas, A is Ni, Co, Mn, or a combination thereof; B is Al, Ni, Co, Mn, Cr, Fe, Mg, Sr, V, a rare-earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

There is no doubt that the compound with a coating layer on the surface thereof may be used, or a mixture of the compound and the compound with a coating layer may be used. The coating layer may contain a compound of a coating element, such as an oxide of the coating element, a hydroxide, an oxyhydroxide of the coating element, an oxycarbonate of the coating element, or a hydroxycarbonate of the coating element. The compound constituting these coating layers may be amorphous or crystalline. As the coating element contained in the coating layer, Mg, Al, Co, K, Na, Ca, Si, Ti, V, Sn, Ge, Ga, B, As, Zr, or a mixture thereof may be used. For a coating layer formation process, any coating method that enables coating using such elements with the compound without adversely affecting the physical properties of the positive electrode active material may be used without limitation. Since this method is well-understood by those skilled in art, detailed descriptions will be omitted.

For example, $LiNiO_z$, $LiCoO_2$, $LiMn_xO_{2x}$ ($x = 1, 2$), $LiN_{1-x}Mn_xO_2$ ($0 < x < 1$), $LiNi_{1-xy}Co_xMn_yO_2$ ($0 \leq x \leq 0.5$, and $0 \leq y \leq 0.5$), $LiFeO_2$, $V_2O_5$, TiS, MoS, and the like may be used.

In the positive electrode active material composition, the conductive additive, the binder, and the solvent may be the same as those in the negative electrode active material composition described above. In some cases, a plasticizer may be further added to the positive electrode active material composition and the negative electrode active material composition to form pores inside the electrode plate. The positive electrode active material, the conductive additive, the binder, and the solvent are contained in amounts at levels commonly used in lithium batteries.

The positive electrode current collector has a thickness of 3 to 500 $\mu$m, and any positive electrode current collector having high conductivity that does not cause chemical changes in the battery may be used without particular limitation. Examples thereof used may include stainless steel, aluminum, nickel, titanium, sintered carbon, or aluminum or stainless steel whose surface is treated with carbon, nickel, titanium, silver, and the like. The current collector may form fine projections on the surface thereof to enhance the adhesive strength of the positive electrode active material and may be used in various forms such as films, sheets, foils, nets, porous materials, foams, non-woven fabrics, and the like.

A positive electrode plate may be prepared by coating the current collector directly with the prepared positive electrode active material composition and then drying the resulting product. Alternatively, the positive electrode plate may be manufactured by casting the positive electrode active material composition on a separate support and then laminating a film obtained by being detached from the support on the positive electrode current collector.

The positive and negative electrodes may be separated by a separator, and any separator commonly used in lithium batteries may be used. In particular, any separator that has low resistance to ion movement in the electrolyte and has excellent electrolytic solution-retaining capability is suitable. For example, the separator may be made of a material selected from among glass fiber, polyester, Teflon, polyethylene, polypropylene, polytetrafluoroethylene (PTFE), and combinations thereof and have a form of non-woven or woven fabric. The separator used has a pore diameter of 0.01 to 10 $\mu$m and typically has a thickness of 5 to 300 $\mu$m.

A lithium salt-containing non-aqueous electrolyte is made of a non-aqueous electrolyte and lithium. As the non-aqueous electrolyte, a non-aqueous electrolyte solution, a solid electrolyte, an inorganic solid electrolyte, and the like are used.

Examples of the non-aqueous electrolyte solution used may include aprotic organic solvents, such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, acetonitrile, nitromethane, methyl formate, methyl acetate, triethyl phosphate, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, and the like.

Examples of the organic solid electrolyte used may include, for example, polyethylene derivatives, polyethylene oxide derivatives, polypropylene oxide derivatives, phosphoric acid ester polymers, poly agitation lysine, polyester sulfides, polyvinyl alcohols, poly vinylidene fluorides, polymers containing ionic dissociation groups, and the like.

Examples of the inorganic solid electrolyte used may include nitrides, halides, sulfates, and the like of Li, such as $Li_3N$, $LiI$, $Li_5NI_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$, and the like.

Any lithium salt commonly used in lithium batteries may be used without limitation. As the lithium salt, a material easily soluble in the non-aqueous electrolyte, one or more materials, such as LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lower aliphatic lithium carbonate, lithium tetraphenylborate, or imide, may be used.

Lithium secondary batteries may be classified into lithium-ion batteries, lithium-ion polymer batteries, and lithium polymer batteries depending on the types of separator and electrolyte used, may be classified into a cylinder type, a prism type, a coin type, a pouch type, and the like depending on the forms, and may be divided into a bulk type and a thin-film type depending on the size.

Since a method for manufacturing these batteries is widely known in the art, detailed descriptions are omitted.

**Mode for Invention**

Hereinafter, the present application will be described in more detail using examples and comparative examples, but the present application is not limited thereto.

**[Example 1]**

10 parts by weight of silicon particles (D50: 15 $\mu$m), 100 parts by weight of isopropyl alcohol (IPA), 2 parts by weight of stearic acid, and 0.01 parts by weight of LiOH were mixed, added to a bead mill, and ground to make the mean particle diameter ($D_{50}$) 102 nm.

Spray drying was performed on the ground solution to prepare silicon precursor particles having a mean particle diameter (D50) of 5 $\mu$m.

The silicon precursor particles, a petroleum-based pitch, and graphite were each independently carbonized and then added to a composite forming device (self-manufactured by Hansol Chemical) in a weight ratio of 60:20:20 to form a composite for 30 minutes. Next, heat treatment was performed at a temperature of 900°C for 3 hours in an argon (Ar) gas atmosphere to prepare a negative electrode active material.

**[Example 2]**

A negative electrode active material was prepared in the same manner as in Example 1, except for using silicon having a mean particle diameter (D50) of 84 nm.

**[Example 3]**

A negative electrode active material was prepared in the same manner as in Example 1, except for using silicon having a mean particle diameter (D50) of 136 nm.

**[Example 4]**

A negative electrode active material was prepared in the same manner as in Example 1, except for adding 0.1 parts by weight of LiOH.

**[Example 5]**

A negative electrode active material was prepared in the same manner as in Example 1, except for adding 1.5 parts by weight of the silicon particles.

**[Example 6]**

A negative electrode active material was prepared in the same manner as in Example 1, except for adding 0.5 parts by weight of the silicon particles.

**[Example 7]**

A negative electrode active material was prepared in the same manner as in Example 1, except for performing the heat treatment at a temperature of 1,250°C.

**[Example 8]**

A negative electrode active material was prepared in the same manner as in Example 1, except for performing the heat treatment at a temperature of 750°C.

**[Comparative Example 1]**

A negative electrode active material was prepared in the same manner as in Example 1, except for not adding LiOH.

**[Preparation Example]**

Manufacturing of half-coin cell

A negative electrode slurry was prepared by evenly mixing each negative electrode active material, prepared in Examples 1 to 8 and Comparative Example 1, a conductive additive (Super P), and a binder (SBR-CMC) in a weight ratio of 93:3:4.

A copper foil current collector having a thickness of 20 $\mu$m was coated with the prepared negative electrode slurry. Next, the coated electrode plate was dried at a temperature of 120°C for 30 minutes and then pressed to manufacture a negative electrode.

A CR2032-type half-coin cell was manufactured by using the negative electrode, metal lithium as a counter electrode, a PE separator as a separator, and 1.0 M LiPF6 dissolved in a mixed solvent of ethylene carbonate (EC):diethyl carbonate (DEC):dimethyl carbonate (DMC) (in a volume ratio of 3:5:2) as an electrolyte.

Manufacturing of full-coin cell

The negative electrode used in the half-coin cell was used, and a positive electrode was manufactured as follows. $LiNi_{0.6}Co_{0.2}Mn_{0.2}O_2$, serving as a positive electrode active material, and PVA-PAA, serving as a binder, were mixed in a weight ratio of 1:1 to prepare a positive electrode slurry, followed by coating an aluminum foil current collector having a thickness of 12 $\mu$m with the positive electrode slurry. Next, the coated electrode plate was dried at a temperature of 120°C for 15 minutes and then pressed to manufacture the positive electrode.

A CR2032-type full-coin cell was manufactured by using the manufactured positive and negative electrodes, a PE separator as a separator, and 1.5 M LiPF6 dissolved in a FEC 20% mixed solvent of ethylene carbonate (EC):diethyl carbonate (DEC):dimethyl carbonate (DMC) (in a volume ratio of 2:1:7) as an electrolyte.

**Evaluation Example 1: SEM and TEM analysis**

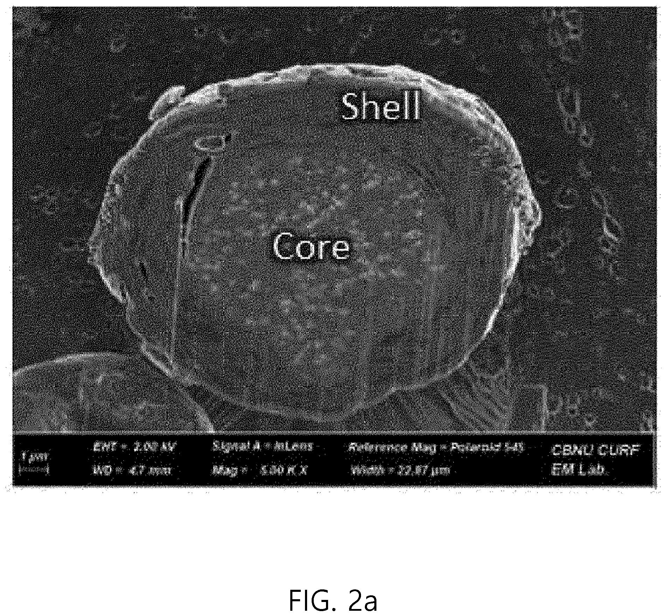

FIG. 2A shows the scanning electron microscopy (SEM) analysis results for a cross section of the negative electrode active material prepared in Example 1.

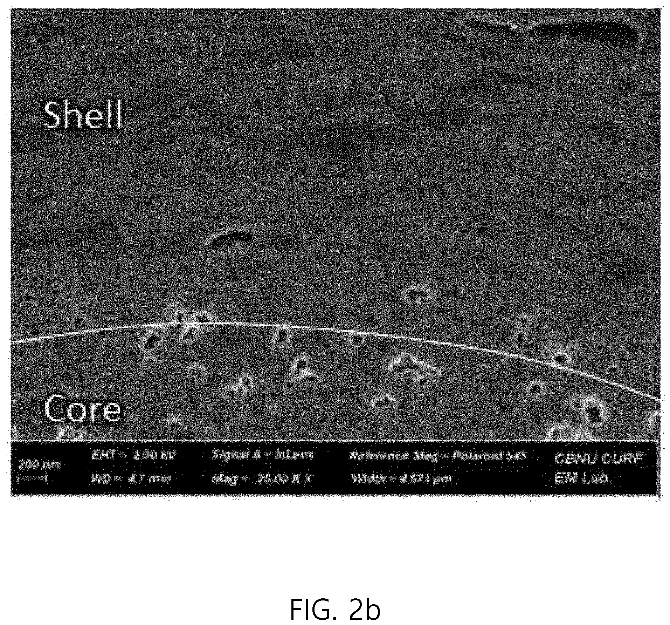

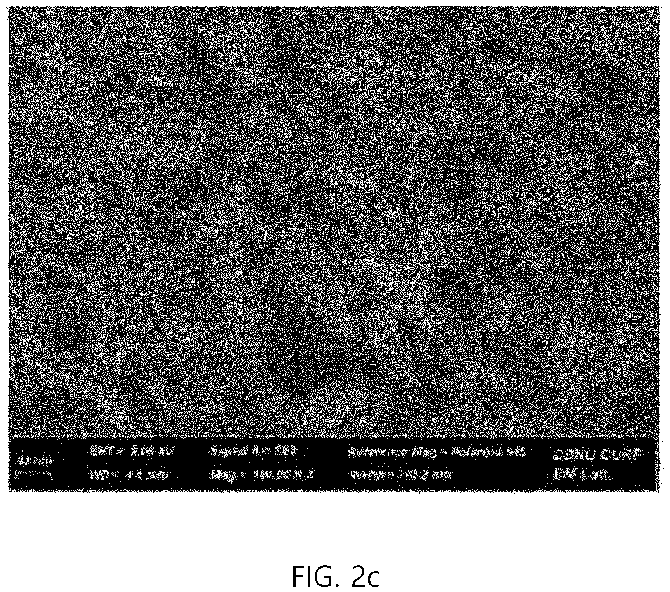

A boundary between a core and a shell was well observed (FIG. 2B). In addition, it was confirmed that many silicon particles coated with $Li_xSi$ were distributed in the core in the form of flake-like primary particles (FIG. 2C).

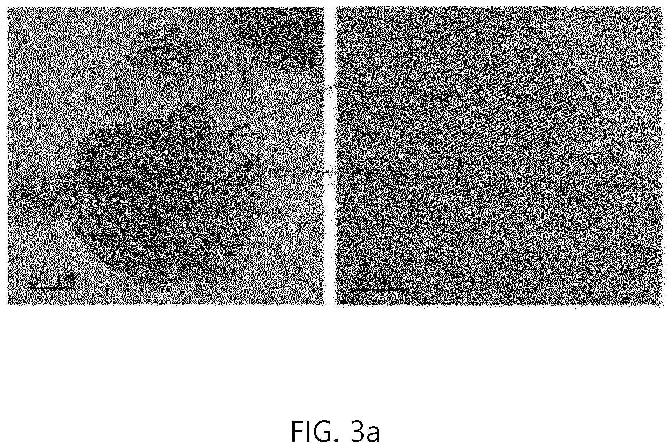

In addition, FIG. 3A shows the transmission electron microscopy (TEM) analysis results to more clearly confirm the form of the silicon particle coated with $Li_xSi$.

$Li_xSi$ applied on the surface of the silicon particle was confirmed.

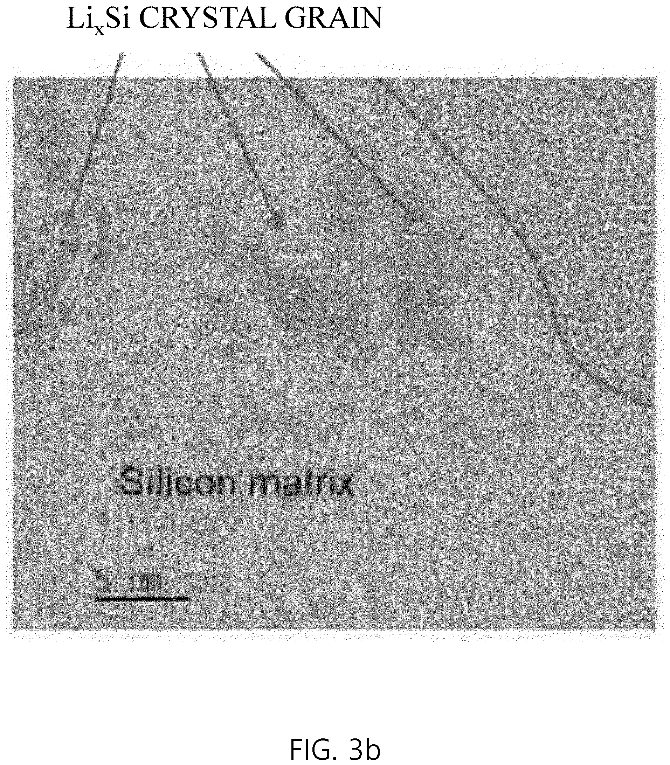

Furthermore, crystal grains of $Li_xSi$ were confirmed (FIG. 3B).

Table 1 below shows the mean grain size of the silicon particle analyzed through the transmission electron microscopy (TEM) analysis.

[Table 1]

|  | Si particle size ($D_{50}$, nm) | Si particle grain size ($D_{50}$, nm) |
|---|---|---|
| Example 1 | 102 | 15.62 |
| Example 2 | 84 | 14.89 |
| Example 3 | 136 | 17.21 |
| Example 4 | 104 | 15.81 |
| Example 5 | 100 | 15.02 |

(continued)

| | Si particle size ($D_{50}$, nm) | Si particle grain size ($D_{50}$, nm) |
|---|---|---|
| Example 6 | 103 | 15.45 |
| Example 7 | 105 | 22.76 |
| Example 8 | 101 | 9.17 |
| Comparative Example 1 | 103 | 15.79 |

In other words, through the SEM and TEM analysis, the core-shell structure of the negative electrode active material of the present application and the silicon particle coated with $Li_xSi$ were confirmed, respectively.

**Evaluation Example 2: FIB-EDS analysis**

The negative electrode active material prepared in Example 1 was sampled by FIB (Nova200 manufactured by FEI), and EDS line scan analysis was performed using STEM-EDS (JEOL-2200FS manufactured by JEOL) under the condition of an acceleration voltage of 20 kV.

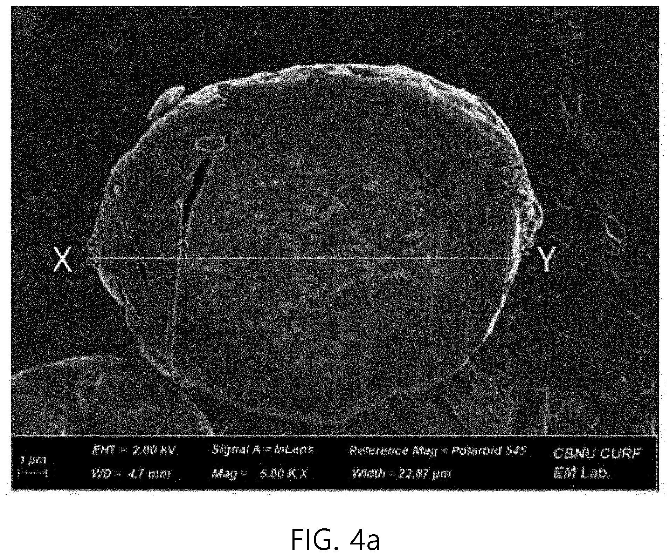

As shown in FIG. 4A, a concentration ratio of carbon, silicon, and oxygen in the core and the shell was analyzed by the EDS line scan performed along the XY line corresponding to the horizontal axis of the cross section of the negative electrode active material prepared in Example 1.

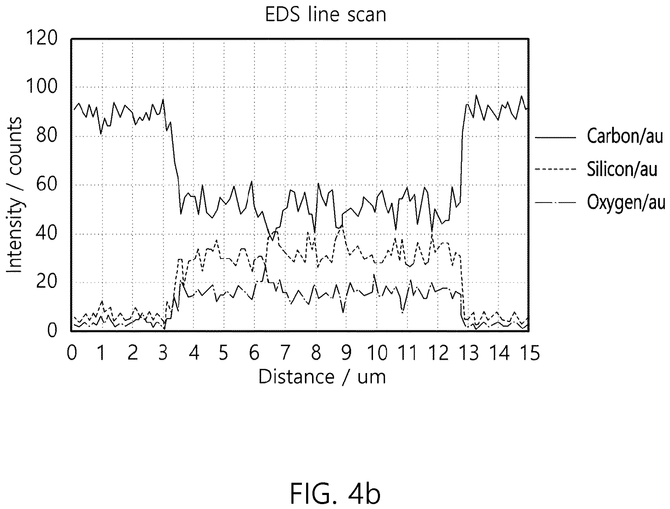

As a result of the analysis, as shown in FIG. 4B, the concentrations of silicon and oxygen were relatively higher in the core than in the shell, and the concentration of carbon was higher in the shell than in the core.

Through this, it was confirmed that the silicon particles coated with $Li_xSi$ were distributed mainly in the core, and the shell contained a smaller amount of the silicon particles coated with $Li_xSi$ than the shell and was made up mainly of carbon.

In other words, through the EDS line scan analysis, the core and shell components in the negative electrode active material having the core-shell structure of the present application were specifically confirmed.

**Evaluation Example 3: Evaluation of battery characteristics**

The battery characteristics of the half-coin cells and full-coin cells manufactured using the negative electrode active materials, prepared in Examples 1 to 8 and Comparative Example 1, were evaluated as follows.

The full-coin cells were used to measure life characteristics, and the half-coin cells were used to evaluate other battery characteristics.

Constant-current charging was performed on each half-coin cell manufactured using the negative electrode active materials, prepared in Examples 1 to 8 and Comparative Example 1, at a temperature of 25°C at a current rate of 0.1 C until the voltage level reached 0.01 V (vs. Li). Then, while maintaining the voltage level of 0.01 V, constant-voltage charging was performed until the current rate reached 0.05 C. After putting the fully charged cell to rest for 10 minutes, constant-current discharging at a current rate of 0.1 C was performed until the voltage level reached 1.5 V (vs. Li) (performed twice, initial formation). The "C", the discharge rate of the cell, means a value obtained by dividing the total capacity of the cell by the total discharge time.

In addition, constant-current charging was performed on each full-coin cell manufactured using the negative electrode active materials, prepared in Examples 1 to 8 and Comparative Example 1, at a temperature of 25°C at a current rate of 0.1 C until the voltage level reached 4.2 V (vs. Li). Then, while maintaining the voltage level of 4.2 V, constant-voltage charging was performed until the current rate reached 0.05 C. After putting the fully charged cell to rest for 10 minutes, constant-current discharging at a current rate of 0.1 C was performed until the voltage level reached 2.7 V (vs. Li) (performed twice, initial formation).

Next, constant-current charging was performed on the cell at a temperature of 25°C with a current rate of 1.0 C at a voltage level of 4.2 V (vs. Li). Then, while maintaining the voltage level of 4.2 V, constant-voltage charging was performed until the current rate reached 0.05 C. After putting the fully charged coin cell to rest for 10 minutes, a cycle of constant-current discharging at a current rate of 0.1 C was repeatedly performed until the voltage level reached 2.7 V (vs. Li) (first to 100th cycles).

Table 2 below shows the measured initial discharge capacity, initial efficiency, and life characteristics of the cells using the negative electrode active materials prepared in Examples 1 to 8 and Comparative Example 1.

The initial discharge capacity represents the charge and discharge capacity at the first cycle.

The initial efficiency, life characteristics, and output characteristics were calculated from Equations 1, 2, and 3, respectively.

Initial efficiency [%] = [Discharge capacity at first cycle/Charge capacity ar first cycle] $\times$ 100                <Equation 1>

Life characteristics [%] = [Discharge capacity at 100th cycle/Discharge capacity at first cycle] $\times$ 100                <Equation 2>

Output characteristics [%] = [Discharge capacity when discharged at a rate of 2.0 C/Discharge capacity when discharged at a rate of 0.1 C] $\times$ 100                <Equation 3>

[Table 2]

| | Initial discharge capacity (mAh/g) | Initial efficiency (%) | Life characteristics (% at 100th) | Output characteristics (% at 2.0 C) |
|---|---|---|---|---|
| Example 1 | 1329.3 | 88.6 | 88.4 | 81.3 |
| Example 2 | 1267.7 | 85.1 | 87.9 | 77.0 |
| Example 3 | 1358.5 | 89.7 | 78.0 | 78.1 |
| Example 4 | 1101.8 | 85.6 | 87.2 | 73.0 |
| Example 5 | 1324.0 | 88.3 | 81.7 | 73.8 |
| Example 6 | 1303.5 | 87.2 | 84.3 | 75.6 |
| Example 7 | 1171.3 | 89.4 | 88.0 | 72.3 |
| Example 8 | 1233.5 | 83.5 | 82.4 | 75.7 |
| Comparative Example 1 | 1327.8 | 88.4 | 86.4 | 74.6 |

Through the examples, it was confirmed that battery characteristics changed as the size and amount of the silicon particle, the amount of LiOH added, and the heat treatment temperature were adjusted.
In other words, the batteries of Examples 1 to 8 exhibited an initial discharge capacity of 1,100 to 1,330 mAh/g, an initial efficiency of 83 to 90%, life characteristics of 75 to 90%, and output characteristics of 70 to 85%.
On the other hand, when comparing Example 1 with Comparative Example 1, which was prepared in the same manner except for not adding LiOH, it was confirmed that the battery characteristics of Comparative Example 1 were reduced compared to those of Example 1.
In other words, Comparative Example 1 exhibited slightly deteriorated properties in initial discharge capacity, initial efficiency, and life characteristics compared to Example 1, and in particular, output characteristics were significantly deteriorated.
Therefore, it was confirmed that the negative electrode active material containing the silicon particles coated with the alkali metal containing-compound ($Li_xSi$) of the present application had superior battery characteristics, in particular, output characteristics, compared to the negative electrode active material containing uncoated silicon particles.
The scope of the present disclosure is defined by the appended claims rather than the detailed description presented above. All changes or modifications derived from the meaning and scope of the claims and the concept of equivalents should be construed to fall within the scope of the present disclosure.

**Industrial Applicability**

A negative electrode active material, according to the present disclosure, is capable of providing a high-output secondary battery having high capacity and high energy density while enabling a behavior of being stably charged/discharged under high current density.

In addition, the negative electrode active material may be prepared with high efficiency at low costs.

**Claims**

1. A negative electrode active material comprising:

   a core;
   a shell surrounding the core; and
   a metal particle in which a part or all of the surface thereof is coated with an alkali metal-containing compound,
   wherein the metal particle comprises any one or more selected from the group consisting of Mg, Al, Si, Ca, Fe, Mg, Mn, Co, Ni, Zn, and Ge, and
   the alkali metal-containing compound is represented by Formula 1,

   [Formula 1] $A_xM_yO_z$

   wherein in Formula 1,
   A comprises any one or more selected from the group consisting of Li, Na, and K,
   M comprises any one or more selected from the group consisting of Mg, Al, Si, Ca, Fe, Mg, Mn, Co, Ni, Zn, and Ge, and

   $$0.1 \leq x \leq 2.0,\ 0 \leq y \leq 2.0,\ \text{and}\ 0 \leq z \leq 2.0.$$

2. The negative electrode active material of claim 1, wherein the metal particle is a silicon (Si)-containing particle.

3. The negative electrode active material of claim 2, wherein the Si-containing metal particle comprises any one or more selected from the group consisting of a silicon particle, a silicon oxide particle, a silicon carbide particle, and a silicon alloy particle.

4. The negative electrode active material of claim 2, wherein the Si-containing particle has a mean particle diameter (D50) of 50 to 1,000 nm, and
   the Si-containing particle is represented by Formula 2,

   [Formula 2] $SiOx\ (0 \leq x \leq 0.5)$.

5. The negative electrode active material of claim 1, wherein the metal particle has a grain size of 5 to 50 nm.

6. The negative electrode active material of claim 1, wherein in the alkali metal-containing compound of Formula 1, A is Li, and y is 1.

7. The negative electrode active material of claim 1, wherein the core comprises amorphous carbon, and
   the shell comprises crystalline carbon.

8. A method for preparing a negative electrode active material, the method comprising:

   preparing an alkali metal-metal particle precursor by grinding a metal particle and an alkali metal precursor and performing spray drying;
   forming a composite by mixing the alkali metal-metal particle precursor, amorphous carbon, and crystalline carbon; and
   performing heat treatment,
   wherein the metal particle comprises any one or more selected from Si, Al, Ti, Mn, Ni, Cu, V, Zr, Mn, Co, Fe, and Nb, and
   the alkali metal precursor comprises any one or more selected from the group consisting of Li, Na, and K.

9. The method of claim 8, wherein the alkali metal precursor comprises any one or more selected from the group consisting of $Li_2CO_3$, LiOH and a hydrate thereof, NaOH and a hydrate thereof, KOH and a hydrate thereof, lithium acetate (Li acetate), lithium isopropoxide (Li isopropoxide), LiCl, and LizO.

10. The method of claim 8, wherein the amorphous carbon comprises any one or more selected from the group consisting of a coal-based pitch, a mesophase pitch, a petroleum-based pitch, tar, a coal-based oil, a petroleum-based heavy oil, an organic synthetic pitch, sucrose, a naphthalene resin, a polyvinyl alcohol resin, a furfuryl alcohol resin, a polyacrylonitrile resin, a polyamide resin, a phenolic resin, a furan resin, a cellulose resin, a styrene resin, an epoxy resin or vinyl chloride resin, a block copolymer, a polyol, and a polyimide resin, and
the crystalline carbon comprises any one or more selected from the group consisting of natural graphite, artificial graphite, expanded graphite, graphene, carbon black, and a fullerene.

11. The method of claim 8, wherein the forming of the composite is performed by any one or more methods selected from the group consisting of milling, stirring, mixing, and compression.

12. The method of claim 8, wherein in the performing of the heat treatment, the heat treatment is performed at a temperature of 700 to 1100°C.

13. A negative electrode comprising the negative electrode active material of any one of claims 1 to 7.

14. A lithium secondary battery comprising:

a negative electrode comprising the negative electrode active material of any one of claims 1 to 7;
a positive electrode positioned while facing the negative electrode; and
an electrolyte positioned between the negative and positive electrodes.

Shell

METAL PARTICLE

ALKALI METAL COMPOUND
$(A_X M_Y O_Z)$ COATING

Core

FIG. 1

FIG. 2a

FIG. 2b

FIG. 2c

FIG. 3a

FIG. 3b

FIG. 4a

FIG. 4b

<div align="center">

**INTERNATIONAL SEARCH REPORT**

</div>

| | International application No. |
|---|---|
| | **PCT/KR2022/009014** |

**A.    CLASSIFICATION OF SUBJECT MATTER**

**H01M 4/36**(2006.01)i; **H01M 4/38**(2006.01)i; **H01M 4/48**(2010.01)i; **H01M 4/58**(2010.01)i; **H01M 4/583**(2010.01)i; **H01M 4/62**(2006.01)i; **H01M 4/587**(2010.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 4/36(2006.01); H01M 10/052(2010.01); H01M 4/134(2010.01); H01M 4/1393(2010.01); H01M 4/38(2006.01); H01M 4/583(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (negative electrode), 규소 (silicon), 코어 (core), 쉘 (shell), 비정질 (amorphous), 결정질 (crystalline)

**C.    DOCUMENTS CONSIDERED TO BE RELEVANT**

| Category* | Citation of document, with indication, where appropriate, of the relevant passages | Relevant to claim No. |
|---|---|---|
| X | JP 2016-506035 A (SAMSUNG ELECTRONICS CO., LTD.) 25 February 2016 (2016-02-25)<br>See claims 1-3, 8 and 9; paragraphs [0031]-[0035]; and figures 1 and 2. | 1-14 |
| A | KR 10-1368474 B1 (KNU-INDUSTRY COOPERATION FOUNDATION) 03 March 2014 (2014-03-03)<br>See entire document. | 1-14 |
| A | KR 10-2017-0069163 A (LG CHEM, LTD.) 20 June 2017 (2017-06-20)<br>See entire document. | 1-14 |
| A | JP 2011-113862 A (HITACHI MAXELL LTD.) 09 June 2011 (2011-06-09)<br>See entire document. | 1-14 |
| A | JP 6256855 B2 (KAWAKAMI, Soichiro) 10 January 2018 (2018-01-10)<br>See entire document. | 1-14 |

☐ Further documents are listed in the continuation of Box C.          ☑ See patent family annex.

| | | |
|---|---|---|
| *     Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "D"   document cited by the applicant in the international application | "X" | document of particular relevance; the claimed invention cannot be considered novel or cannot be considered to involve an inventive step when the document is taken alone |
| "E"   earlier application or patent but published on or after the international filing date | | |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&" | document member of the same patent family |
| "P"   document published prior to the international filing date but later than the priority date claimed | | |

| Date of the actual completion of the international search | Date of mailing of the international search report |
|---|---|
| **04 October 2022** | **05 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<div style="text-align:center">

**INTERNATIONAL SEARCH REPORT**
**Information on patent family members**

</div>

International application No.

**PCT/KR2022/009014**

| Patent document cited in search report | | | Publication date (day/month/year) | Patent family member(s) | | | Publication date (day/month/year) |
|---|---|---|---|---|---|---|---|
| JP | 2016-506035 | A | 25 February 2016 | CN | 104736479 | A | 24 June 2015 |
| | | | | CN | 104736479 | B | 09 January 2018 |
| | | | | EP | 2930146 | A1 | 14 October 2015 |
| | | | | EP | 2930146 | B1 | 09 October 2019 |
| | | | | JP | 6509124 | B2 | 08 May 2019 |
| | | | | KR | 10-1906973 | B1 | 07 December 2018 |
| | | | | KR | 10-2014-0072663 | A | 13 June 2014 |
| | | | | US | 2015-0280223 | A1 | 01 October 2015 |
| | | | | WO | 2014-088187 | A1 | 12 June 2014 |
| KR | 10-1368474 | B1 | 03 March 2014 | KR | 10-2013-0107892 | A | 02 October 2013 |
| KR | 10-2017-0069163 | A | 20 June 2017 | CN | 107925067 | A | 17 April 2018 |
| | | | | CN | 107925067 | B | 23 March 2021 |
| | | | | EP | 3382779 | A1 | 03 October 2018 |
| | | | | EP | 3382779 | B1 | 22 May 2019 |
| | | | | KR | 10-1977931 | B1 | 13 May 2019 |
| | | | | PL | 3382779 | T3 | 30 September 2019 |
| | | | | US | 10511048 | B2 | 17 December 2019 |
| | | | | US | 2018-0269519 | A1 | 20 September 2018 |
| | | | | WO | 2017-099523 | A1 | 15 June 2017 |
| JP | 2011-113862 | A | 09 June 2011 | JP | 5464653 | B2 | 09 April 2014 |
| JP | 6256855 | B2 | 10 January 2018 | JP | 2016-021332 | A | 04 February 2016 |
| | | | | US | 1018337 | B2 | 25 May 2021 |
| | | | | US | 10541411 | B2 | 21 January 2020 |
| | | | | US | 2017-0200943 | A1 | 13 July 2017 |
| | | | | US | 2020-0119343 | A1 | 16 April 2020 |
| | | | | WO | 2016-010056 | A1 | 21 January 2016 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190101807

- US 8158282 B